# EUROPEAN PATENT APPLICATION

(11) **EP 4 335 947 A1**
(43) Date of publication of application: **13.03.2024**
(21) Application number: 22194237.8
(22) Date of filing: 06.09.2022
(51) Int. Cl.: C25B 9/70, C25B 11/052, C25B 15/00, G06F 17/11, G06N 20/00

(54) **METHOD AND SYSTEM FOR OPERATING AN ELECTROCHEMICAL REACTOR**

(71) Applicant: Covestro Deutschland AG, 51373 Leverkusen (DE)
(72) Inventor: LUTZ, Helmut, 42799 Leichlingen (DE); BULAN, Andreas, 40764 Langenfeld (DE); TRIEU, Vinh, 50679 Köln (DE); KARDASH, Stanislav, 45143 Essen (DE); HEINZ, Paul, 51375 Leverkusen (DE)
(74) Representative: Levpat

(57) **Abstract**

A method for operating an electrochemical reactor is disclosed. The reactor comprises, as electrodes, an anode and a cathode. Additionally, the reactor is configured to receive a feed of a starting material, to effect electrochemical reaction of the starting material into a product in the presence of a catalyst-coated electrode, and to output the product. The reactor is operated based on a set of operation parameters, the operation parameters at least comprising a voltage over the electrodes of the reactor and a dosage of catalyst solution and/or catalyst precursor solution into the feed of the starting material. The method comprises:
receiving a reactor model, the reactor model describing a behavior of the reactor, including at least a relation between the voltage over the electrodes, and the dosage of catalyst solution and/or catalyst precursor solution into the starting material feed,
determining an optimized dosage by optimizing the dosage of catalyst solution and/or the catalyst precursor into the starting material feed in order to minimize the voltage using the reactor model, and
outputting the optimized dosage for being used at operating the reactor.

Additionally, an according system is disclosed as well as a computer program product and a computer-readable storage medium.

## Description

The present disclosure relates to a method for operating an electrochemical reactor, such as a hydrochloric acid electrolysis cell. The present disclosure further relates to a corresponding system, as well as to a computer program product and to a computer-readable storage medium.

In the production of isocyanates via the phosgenation of the corresponding amines, hydrogen chloride is generated as a by-product. Recovering the chlorine by electrolyzing hydrochloric acid formed from the hydrogen chloride offers the opportunity of a closed chlorine loop. This is highly desirable, in particular from a sustainability standpoint.

When electrolyzing aqueous hydrochloric acid in diaphragm cells, it is known to reduce the cell voltage by adding metal salts to the electrolyte. In the course of the electrolysis, such metals deposit on the cathodes of the electrolytic cells. The layer thus produced reduces the hydrogen overvoltage. For example, US 3 336 209 describes a process for reducing the hydrogen overvoltage in the electrolysis of aqueous hydrochloric acid in diaphragm cells to form hydrogen and chlorine by the addition of metal salts to the electrolyte, wherein said metal salt is a salt of palladium added in an amount providing from 0.2 to 2 grams of palladium per square meter of active electrode surface.

Experience has shown that the deposited metal on the cathode needs to be replenished during the operation of the electrolyzer in order to maintain a high performance. Basic options of replenishment are continuous and discontinuous addition of metal salts. The continuous dosage of a metal salt solution into a starting material feed may not be the optimal mode of operation, especially if the desired production output of the electrolyzer changes over time. In the discontinuous case, adding at regular, pre-defined intervals may also not capture the optimum of cathode coating as the saturation of the cathodes does not lead to a further reduction in hydrogen overvoltage while the costs of the metal salts are still incurred.

Hence the need for data-driven modes of timing the addition of metal salt solution to electrolytes for an electrolyzer still exists.

EP 3 696 619 A1 discloses systems and methods for determining an operating condition of a chemical production plant including at least one catalytic reactor. Via a communication interface, operating data and a catalyst age indicator are received. At least one target operating parameter for the operating condition of a scheduled production run or a current production run are determined. The at least one target operating parameter for the operating condition may be used for monitoring and/or controlling the chemical production plant.

It is an object of the present disclosure to provide a method and a system that supports optimizing a dosage of a catalyst solution and/or a catalyst precursor solution for the operation of an electrochemical reactor.

Accordingly, with the present disclosure, a method for operating an electrochemical reactor is provided. The reactor may be one of several or one of a plurality of reactors, which are electrically connected to each other and/or which might receive their starting material feed in parallel. The reactor comprises, as electrodes, an anode and a cathode. The reactor is configured to effect the electrochemical reaction of a starting material into a product in the presence of a catalyst-coated electrode and the reactors are configured to receive a feed of the starting material and outputs the product. The reactor is operated based on a set of operation parameters, which at least comprise a voltage over the electrodes of the reactor and a dosage of catalyst solution and/or catalyst precursor solution into the starting material feed. The set of operation parameters can also comprise an electric current flowing to the electrodes of the reactor.

According to one embodiment, the method comprises:
receiving a reactor model, the reactor model describing a behavior of the reactor, including at least a relation between the voltage over the electrodes and the dosage of catalyst solution and/or catalyst precursor solution into the starting material feed,
determining an optimized dosage by optimizing the dosage of catalyst solution and/or catalyst precursor into the starting material feed in order to minimize the voltage using the reactor model, and
outputting the optimized dosage for being used at operating the reactor.

In the context of the present disclosure, the term "electrochemical reactor" shall mean a reactor in which either electrical energy is generated from chemical reactions or electrical energy is used to drive chemical reactions (electrolysis). An example of an electrochemical reactor is a filter-press reactor with parallel plate electrodes. Other but less common examples are stirred tanks with rotating cylinder electrodes. The electrochemical reaction catalyzed and the scale of it is not restricting the scope of this disclosure. For example, the present disclosure may be applicable to the industrial electrolysis of water, as well as the generation of electrical energy from portable fuel cells used in households and automobiles.

The presented disclosure uses a reactor model, which describes at least part of the behavior of the reactor. This behavior comprises at least a relation between the voltage over the electrodes, and the dosage of the catalyst solutions and/or the catalyst precursor solution. The reactor model might be generated based on the operated reactor, e.g. by training a model on historical data. However, the reactor model might also be pre-calculated and used at the optimizing step. The latter approach is particularly useful, when no sensor data and/or other detailed information about the operated reactor is available, e.g. at the beginning of the process. This approach might also be useful, when domain knowledge about the process allows to use the same model for longer periods of time until the model needs to be updated to changed conditions. In this case, an initial, probably simpler model may be constructed without training on historical data, e.g. by merely formulating a linear equation that expresses the dependance of the voltage on different factors, such as temperature, electrolyte concentration, and current, based on domain knowledge. In both cases, i.e. using a pre-calculated model or generating a model, the available reactor model might be updated during operation, e.g. based on operation duration, measured values, etc. It should be noted that the present disclosure is not limited to the usage of a single reactor model. The present disclosure can also use two or more reactor models to model the behavior of the reactor. For instance, this might be helpful, if the reactor is modelled in different operating states or the several reactor models refer to different aspects of the operation of the reactor.

In one embodiment, the reactor model might additionally contain a dependency on the electric current flowing to the electrodes. In this case, the modelled behavior might comprise at least a relation between the voltage over the electrodes, a current to the electrodes, and the dosage of the catalyst solutions and/or the catalyst precursor solution. If the current is imposed, e.g. by a constant current power supply, the dependency on the current can be replaced by a constant. It should be noted that "flowing to the electrodes" should also include currents flowing from the electrodes, as the flowing direction can be reflected by signed or unsigned numbers.

At the present disclosure, an optimization may refer to any mathematical function or method that aims to find the minimum or maximum of a target function, preferably under the consideration of given parameter bounds. This minimum / maximum might be a global minimum / maximum. Typical optimization methods include the basin-hopping algorithm, the differential evolution algorithm, the dual annealing algorithm, the simplicial homology global optimization algorithm, but also the trivial brute force approach, just to name a few potentially useful methods.

In this context, the target function may be represented by the reactor model. In one embodiment, the optimization algorithm may artificially generate sets of input parameters for the model and trigger the model to make a prediction for each set of input parameters. The generation of sets of input parameters may occur for example randomly, in guided/directed iterative steps, or a combination thereof. Preferably, the algorithm is constrained to only generate input parameters that are within sensible bounds of operating conditions. The predictions produced by the model may be saved together with the corresponding parameter set that was used to make the prediction. As an example, one objective of the optimization may be cost optimization of the frequency of catalyst addition for one reactor. Optimization may be carried out by generating different patterns and frequencies of catalyst addition for a fixed, desired set of operating conditions. The optimization function may then trigger predictions of the voltage for each set of catalyst addition frequencies, compute the cost of applying catalyst in the given frequency and compare it to the cost of electricity, as is obtained from multiplying electrical current with voltage and price of electrical power. Optimization might also find a minimum dosage of catalyst solution, a minimum wear of the reactor, or a maximum gain of product, just to name a few, not limiting examples.

The optimization steps, which might also be regarded as an optimization sub-method, may receive one or more optimization targets as well as one or more operating parameters with one or more boundaries for the optimization. For example an operator may be provided with a selection of possible optimization targets and the selection is received by the optimization sub-method.

The optimization may be carried out for example for individual electrolyzers, for subsets of electrolyzers, or for an entire cell room. In certain cases, the difference in reactor design may warrant the construction of separate models for each reactor design. Subsequently, the optimization may be carried out for each of the reactor types separately.

In the case of one or more optimization target(s), one or more optimal solutions may be identified, which may or may not include the global optimum. The one or more optimal solutions may be provided to a monitoring system and may be displayed on a display device. In such a case, an operator of the production plant, which includes the operated reactor(s), is enabled to choose between the provided solutions and different scenarios for future operation. or may directly trigger process changes through electronic process control devices. In another exemplary scenario, the optimal solution(s) are submitted as signals to electronic process control devices and may directly influence the operation of the plant. In another exemplary scenario, these electronic signals may require the approval of authorized staff before altering the operation of the plant.

In one embodiment, the reactor is one of a plurality of reactors, the plurality of reactors being electrically connected to each other and/or receiving their respective starting material feed in parallel, and determining an optimized dosage comprises optimizing the dosage for each of the plurality of reactors and determining an optimized dosage by combining the optimized dosages for each of the plurality of reactors.

In this case, there might be multiple models and/or distributed optimizations for single reactors or subsets of reactors. If only a single feed of catalyst for all reactors is available, it might be beneficial if an optimized dosage is consolidated. In a preferred embodiment the consolidation of different optimization results may take the form of averaging an optimal dosage frequency for different reactors. Other strategies may be to only administer catalyst at the minimum or maximum frequency, depending on for example possible constraints on expenses.

In one embodiment, receiving a reactor model comprises:
receiving reactor metadata indicating at least one of the number, type and age of parts in the reactor, the geometric configuration of the reactor and an identifier of the reactor,
receiving sensor data representative for a current status of the reactor, and
generating the reactor model by training a machine learning model based on the reactor metadata and the sensor data, wherein the machine learning model at least models the voltage over the electrodes.

In this embodiment, the method can be regarded as a sequence of a model building sub-method and an optimization sub-method. It should be understood that the order of the sub-methods is not essential. The model building sub-method might be performed before performing the optimization sub-method. In this case, the optimization will use the reactor model generated by the model building sub-method, so that the optimization might be based on a very current reactor model. However, the optimization sub-method might also be performed before performing the model building sub-method. In this case, the optimization sub-method might use an earlier received reactor model and the model building sub-method can use the optimized dosage and can be regarded as updating the reactor model for the next optimization sub-method.

At this model building sub-method, two types of data are received: Metadata and sensor data. Metadata refer to data that are specific to the type of reactor. For example, in the case of a filter press type bipolar electrolyzer, metadata preferably includes information on the number of cells in an electrolyzer, the type of diaphragm (e.g. PVC or PVC/PVDF), or the age of electrodes. Generally, the term metadata can emphasize that this type of data provides information about the state of the electrochemical reactor / all electrochemical reactors, and related parts in the process. Usually metadata is not sensitive to the way in which the plant is operated. Exceptions may exist, for example it is known that parts in the reactor are ageing more rapidly, when operated under maximum load or with frequent shut-downs. This might be considered at the metadata.

The metadata may comprise the physical location of each reactor (e.g., denoted by an identification number) and the time period of operation for each reactor. Based on this information, a model can be built which models the performance as a function of reactor age. Additional metadata may include, but are not limited to: the number, type and age of parts in the reactor, and the geometric configuration of the reactor. In a preferred embodiment, the set of metadata is stored in the form of a flat table, where each row may contain all metadata available for one electrolyzer for a given time range. In this case, the time range can be specified by the date of starting a new (or repaired) electrolyzer in a given position and the date when the operation of the given electrolyzer in the given physical location is terminated (e.g. due to maintenance). For a given row in the data set, all metadata - including location, operational start date and end date - can be stored in separate columns.

The sensor data contain measured value(s) of sensor(s) measuring one or several physical value(s) within the reactor(s) or part(s) connected to the reactor(s). For example this sensor / these sensors may comprise temperature sensors at the inflow of electrolyte into the electrolyzer, current sensors, voltage sensors, or sensors which record the timing and/or amount of catalyst (precursor) addition into the feed of the starting material. The sensor data may also comprise information that enables reconstruction of a time of measurement and/or a sequence of the sensor data. In one embodiment, the sensor data are time-stamped.

The sensor data may be received for at least one reactor and at least two separate points of time of operation. Taking into account the combination of the sensor data with metadata, there may also exist a set of metadata corresponding to the at least one reactor, where the metadata for this reactor covers the at least two separate points of time of operation. In a preferred embodiment, the set of sensor data is stored in the form of a flat table, where a row contains all available sensor data in separate columns. A time stamp, of when the sensor data was collected, and the physical location of the sensors can be stored in separate columns.

In some application scenarios, sensor data is acquired asynchronously. In one embodiment, the data for each sensor can be interpolated to support calculation of an interpolated value for all sensors for one common sampling frequency (e.g. on the full minute, the full hour, etc.).

At generating the reactor model, a machine learning model can be trained using the received metadata and the received sensor data. This step might be regarded as a parametrization of the model to (better) fit to the modelled reactor. It should be noted that training a machine learning model might also include training two or more machine learning models. At the present disclosure, a machine learning model may refer to any mathematical function which is capable of describing a behavior of the reactor and which maps one or more input variables to one or more target variables. The mathematical function can be iteratively adapted by a learning algorithm, with the goal of optimizing the fit of the function to historical data (training data). The historical data can originate from the operation of similar electrochemical reactors like the one to be modelled. Typical machine learning algorithms may include multiple linear regression, support-vector machines, decision tree based approaches like the random forest algorithm, neural networks, etc..

In one embodiment, generating the reactor model comprises:
generating a combined dataset by combining the reactor metadata and the sensor data,
generating a subset of the combined dataset, the subset at least comprising the voltage over the electrodes, and
training the machine learning model with the subset.

At generating a combined dataset, a unique identifier, which is present in both the metadata and the sensor data, can be used to combine the metadata and sensor data of a respective reactor. Other means of combining metadata and sensor data might be used, for example by storing the datasets under specific filenames and then combining data based on certain rules for which files belong together.

Generating a combined dataset might include matching the physical location, where the sensor data was collected, and matching the time stamp of the sensor data to a corresponding set of parameters from the metadata. In a preferred embodiment, the time stamp ('sensor'-time stamp) and the physical location of the electrolyzer ('sensor'-location) are used to "look up" the corresponding row in the metadata table, where the 'sensor'-time stamp lies within the range specified by the operational start- and end date. Subsequently the two rows are merged. In a preferred embodiment, three more values are calculated from 'sensor-date' and added in separate columns to the combined row: the age of the electrolyzer, the age of the frame and the age of the graphite electrodes. Finally, the combined row is stored in a list together with all other combined rows. The list of combined rows is then converted to an array-like data structure for further processing.

Separating data into a subset comprising the voltage and a subset comprising the remaining data can have practical reasons and may prevent the model to be able to use the voltage as an input variable to predict the voltage. In this context, the term model may refer to a data-driven machine learning model or some other form of data-driven mathematical model, which is parameterized to be able to reproduce the voltage of the electrochemical cell or stack of electrochemical cells from the remaining dataset.

Generating a subset may be done by splitting the combined dataset into two or more parts. One or more parts may serve the selection and training of an appropriate machine learning algorithm and can therefore be referred to as train-datasets. The other part(s) may serve as testdataset, to validate the capability of the machine learning model to generalize to novel data. It is worth noting that for obtaining a realistic estimate of the future performance, the temporal order should be preserved throughout the handling of the entire data set until the splitting into train- and test-set. Due to the stability of sensor readings on the industrial scale, a shuffling of datapoints would lead to datapoints in the test set, which are very similar to certain datapoints in the training dataset. This may lead to undetectable "overfitting" which would manifest in a very similar prediction error in both the train- and the test data set.

In a preferred embodiment, the split is carried out according to the general scheme of a crossvalidation for time-series. The size of individual test-sets may be chosen to match the desired prediction horizon. For example, if production experts require a prediction every week, each test-set may be chosen to cover one week. In practice the algorithm then takes the first week of the dataset as train-set and the second week as test-set. After training with data from the first week, the algorithm would go on to take the first two weeks as train-set and the third week as test-set. Continuing in this pattern, the algorithm would finally arrive at a point where it trains on all but the last week. To obtain an estimate of performance one possibility is to average the errors made across all test-sets. Finally one may train the algorithm on the entire data set, to obtain a model for the optimization. Alternatively, under certain circumstances, one may choose to use any of the preceding models for the optimization task.

In one embodiment, the sensor data indicate at least one of an electrical current consumption of the reactor, the voltage over the electrodes of the reactor, an inflow of starting material into the reactor, an outflow of product out of the reactor, a concentration of starting material in a solvent introduced into the reactor, and a dosage of catalyst solution and/or catalyst precursor solution into the feed of the starting material. This sensor data can provide detailed information about the status and/or behavior of the reactor(s).

In one embodiment, two machine learning models are built to capture different behavior of Iridium coated electrolyzers, and uncoated electrolyzers. In a preferred embodiment, both models are built using the random forest algorithm.

According to a preferred embodiment, a sensor data column holding information about a timing and/or amount of catalyst dosage, is further processed and/or aggregated. In this way, more fine-grained adsorption/desorption behavior of the catalyst may be captured by a machine learning model. In one embodiment, the dosage amounts of catalyst can be summed on a daily basis during a limited time interval prior to a respective timestamp. Additional columns can be created to store the aggregated dosage events, thus providing information about how much catalyst was dosed in distinct time-interval prior to the respective datapoint.

In another embodiment, the previously mentioned temporal aggregation of catalyst dosage events might not be necessary if machine learning models are used which can capture temporal dynamic behavior. Examples of implementations for such a machine learning model include but are not restricted to recurrent neural networks and convolutional neural networks.

In one embodiment, outputting the optimized dosage comprises at least one of communication the optimized dosage to an operator and communication the optimized dosage to a process control system for the reactor. Communicating the optimized dosage to an operator might be beneficial, if certain constraints of operation have to be met and/or if a qualified selection of optimized dosages are required. Communication of the optimized dosage to a process control system might support quick and automated usage of the optimized dosage at operating the reactor(s).

In one embodiment, the method further comprises dosing the catalyst solution and/or the catalyst precursor solution into the feed of the starting material according to the optimized dosage. In that way, determining the optimized dosage can have a direct influence on the process at the reactor(s).

In one embodiment, the reactor is one of a plurality of reactors, the plurality of reactors being electrically connected to each other, wherein the starting material feed is a common starting material feed for at least some of the reactors, and wherein these reactors receive the starting material feed in parallel. In this way, the reactor can be part of a plant and can be operated more efficiently. Additionally, using a plurality of reactors can increase the output of the system.

In one embodiment, the electrochemical reaction comprises the reduction of hydrogen cations to hydrogen gas and/or the reduction of an alkaline metal cation to the corresponding alkaline metal.

In one embodiment, the starting material comprises an aqueous solution of hydrochloric acid and/or and aqueous solution of sodium chloride.

In one embodiment, the catalyst comprises nickel, palladium, platin, cobalt, rhodium, iridium, copper, antimony, silver, molybdenum, or a combination of at least two of the aforementioned metals. Particularly at platinum and iridium, the selection of a specific catalyst material might be based on cost considerations.

In one embodiment, determining an optimized dosage and/or receiving a reactor model is performed repeatedly, preferably periodically. In this way, the model and/or the dosage can be adapted to a changing behavior of the reactor(s), e.g. due to aging or variations in the starting material feed. The frequency of the repetition might be dependent on the dynamic of the operation. It might be performed on hourly basis, daily basis, on basis of several days, on weekly basis, or on monthly basis, just to name a few examples. In one embodiment, determining an optimized dosage and/or receiving a reactor model is performed every hour or less. In another embodiment, determining an optimized dosage and/or receiving a reactor model is performed once a month or less.

The present disclosure also encompasses a system for operating an electrochemical reactor,
the reactor comprising, as electrodes, an anode and a cathode, the reactor being configured to receive a feed of a starting material, to effect electrochemical reaction of the starting material into a product in the presence of a catalyst-coated electrode, and to output the product,
the system being configured to carry out the method according to the present disclosure and comprising:
   a reactor model handling entity, configured to receive and/or update and/or generate a reactor model, the reactor model describing a behavior of the reactor, including at least a relation between the voltage over the electrodes, and the dosage of catalyst solution into the starting material feed,
   a dosage optimizer, configured to optimize the dosage of catalyst solution into the starting material feed in order to minimize the voltage using the reactor model, and
   an output interface, configured to output the dosage for being used at operating the reactor.

The present disclosure also encompasses a computer program product comprising instructions which, when the program is executed by a computer, cause the computer to carry out the method according to the present disclosure and a computer-readable storage medium comprising instructions which, when executed by a computer, cause the computer to carry out the method according to the present disclosure.

The present invention will be further described with reference to the following figures without wishing to limit the disclosure to the described examples.
FIG. 1 shows a flow chart of a sub-method according to the present disclosure.
FIG. 2 shows a flow chart of another sub-method according to the present disclosure.
FIG. 3 shows a data processing apparatus system according to the present disclosure.

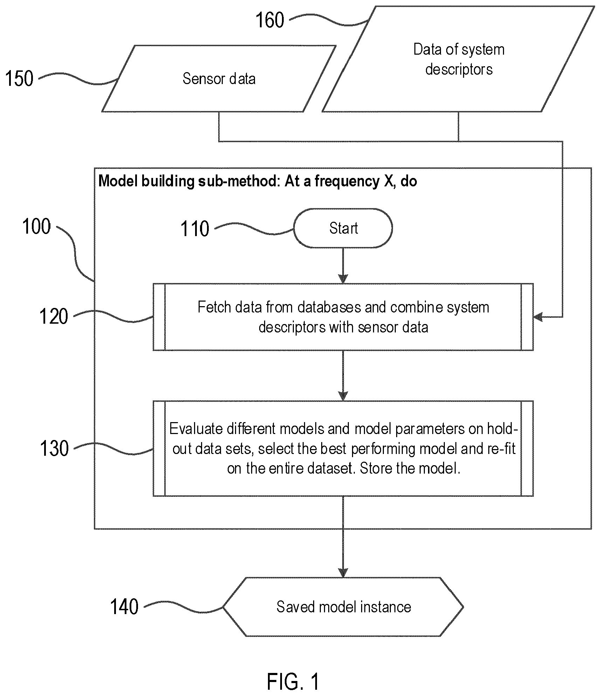

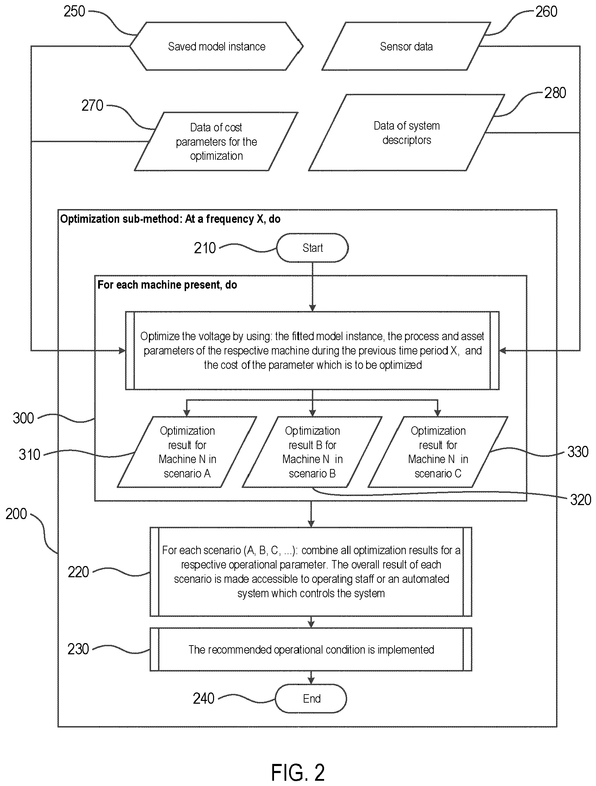

The example shown in FIG. 1 and 2 assumes that the steps of the method for operating one or several or many electrochemical reactor(s) can be grouped into a model building sub-method and an optimization sub-method. The model building sub-method contains the steps for generating a model of the electrochemical reactor or several / many electrochemical reactors.

FIG. 1 shows a flow chart of a model building sub-method 100. This model-building sub-method 100 is executed at a pre-defined frequency X, for example once every hour, once every day, once every week or once every four weeks.

Formally, the method starts at start point 110. Next, in step 120, data is received from data source 150 for sensor data and data source 160 for system descriptors. The reception of sensor data and system descriptor data may occur concurrently or sequentially as the case may be.

Data source 160 may be a data base or a plurality of databases. The system descriptors include reactor metadata indicating the number, type and age of parts in the reactor, the geometric configuration of the reactor and an identifier.

The model built at the model building sub-method 100 is made available at block 140 labeled "saved model instances".

FIG. 2 shows a flow chart of another sub-method. An essential part of this sub-method is an optimization sub-method 200, which is executed at a pre-defined frequency X that might be similarly defined as the frequency X in FIG. 1. The optimization sub-method 200 starts at step 210 and continues at step 300. Step 300 is performed for each machine, i.e. for each reactor.

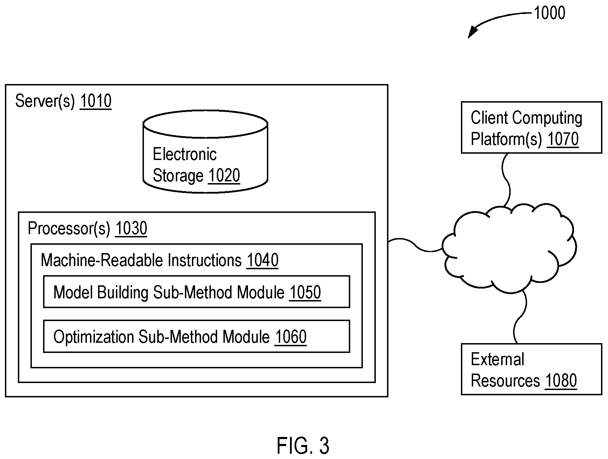

At step 300, saved model instances (block 250) are received. The saved models might be generated by a model building sub-method as shown in FIG. 1 (and provided there at block 140) or might be generated on general domain knowledge of the operated reactor(s). Additionally, at step 300, sensor data are received from data source 260, cost parameters for the optimization are received form data source 270, and system descriptors are received from data source 280. In step 300, the model loaded form block 250 might be a fitted model instance. Besides the received data, step 300 might additionally use data generated during the execution at the previous time period. Step 300 is executed with the optimization target to optimize (i.e. minimize) the voltage measured over the electrodes of each examined reactor. In the example of FIG. 3 three different optimization scenarios are determined: Scenario A, B, and C. Each scenario might reflect different operation and/or optimization strategies. The respective optimization results are output in step 310, 320, and 330. When the optimization is performed for each reactor, the optimization results for the different scenarios (A, B, C, ...) are combined in step 220. Additionally, the result of this combination is output as optimized dosage for being used at operation of the reactors. It may be output to an operator or an automated process control system. At step 230, the recommended optimized operational conditions are implemented, and the reactors are operated at the optimized dosage. The method ends at step 240.

FIG. 3 illustrates a data processing apparatus system 1000 configured for carrying out a method according to the present disclosure. In some implementations, system 1000 may include one or more servers 1010. Server(s) 1010 may be configured to communicate with one or more client computing platforms 1070 according to a client/server architecture and/or other architectures. Client computing platform(s) 1070 may be configured to communicate with other client computing platforms via server(s) 1010 and/or according to a peer-to-peer architecture and/or other architectures. Users may access system 1000 via client computing platform(s) 1070.

Server(s) 1010 may be configured by machine-readable instructions 1040. Machine-readable instructions 1040 may include one or more instruction modules. The instruction modules may include computer program modules. The instruction modules may include one or more of a model building sub-method module 1050, an optimization sub-method module 1060 and/or other instruction modules.

The model-building sub-method module 1050 may be configured to execute the model building steps of the method according to the present disclosure. The optimization sub-method module 1060 may be configured to execute the optimization steps of the method according to the present disclosure.

In some implementations, server(s) 1010, client computing platform(s) 1070, and/or external resources 1080 such as databases may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which server(s) 1010, client computing platform(s) 1070, and/or external resources 1080 may be operatively linked via some other communication media.

A given client computing platform 1070 may include one or more processors configured to execute computer program modules. The computer program modules may be configured to enable an expert or user associated with the given client computing platform 1070 to interface with system 1000 and/or external resources 1080, and/or provide other functionality attributed herein to client computing platform(s) 1070. By way of non-limiting example, the given client computing platform 1070 may include one or more of a desktop computer, a laptop computer, a handheld computer, a tablet computing platform, a NetBook, a Smartphone and/or other computing platforms.

External resources 1080 may include sources of information outside of system 1000, external entities participating with system 1000, and/or other resources. In some implementations, some or all of the functionality attributed herein to external resources 1080 may be provided by resources included in system 1000.

Server(s) 1010 may include electronic storage 1020, one or more processors 1030, and/or other components. Server(s) 1010 may include communication lines, or ports to enable the exchange of information with a network and/or other computing platforms. Illustration of server(s) 1010 in FIG. 3 is not intended to be limiting. Server(s) 1010 may include a plurality of hardware, software, and/or firmware components operating together to provide the functionality attributed herein to server(s) 1010. For example, server(s) 1010 may be implemented by a cloud of computing platforms operating together as server(s) 1010.

Electronic storage 1020 may comprise non-transitory storage media that electronically stores information. The electronic storage media of electronic storage 1020 may include one or both of system storage that is provided integrally (i.e., substantially non-removable) with server(s) 1010 and/or removable storage that is removably connectable to server(s) 1010 via, for example, a port (e.g., a USB port, a firewire port, etc.) or a drive (e.g., a disk drive, etc.). Electronic storage 1020 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 1020 may include one or more virtual storage resources (e.g., cloud storage, a virtual private network, and/or other virtual storage resources). Electronic storage 1020 may store software algorithms, information determined by processor(s) 1030, information received from server(s) 1010, information received from client computing platform(s) 1070, and/or other information that enables server(s) 1010 to function as described herein.

Processor(s) 1030 may be configured to provide information processing capabilities in server(s) 1010. As such, processor(s) 1030 may include one or more of a digital processor, an analog processor, a digital circuit designed to process information, an analog circuit designed to process information, a state machine, and/or other mechanisms for electronically processing information. Although processor(s) 1030 is shown in FIG. 3 as a single entity, this is for illustrative purposes only. In some implementations, processor(s) 1030 may include a plurality of processing units. These processing units may be physically located within the same device, or processor(s) 1030 may represent processing functionality of a plurality of devices operating in coordination. Processor(s) 1030 may be configured to execute modules 1050, 1060 and/or other modules by software; hardware; firmware; some combination of software, hardware, and/or firmware; and/or other mechanisms for configuring processing capabilities on processor(s) 1030. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 1050 and 1060 are illustrated in FIG. 3 as being implemented within a single processing unit, in implementations in which processor(s) 1030 includes multiple processing units, one or more of modules 1050 and/or 1060 may be implemented remotely from the other modules. The description of the functionality provided by the different modules 1050 and 1060 described herein is for illustrative purposes, and is not intended to be limiting, as any of the modules may provide more or less functionality than is described. For example, one or more of modules 1050 and/or 1060 may be eliminated, and some or all of its functionality may be provided by other ones of modules 1050 and/or 1060. As another example, processor(s) 1030 may be configured to execute one or more additional modules that may perform some or all of the functionality attributed below to one of modules 1050 and/or 1060.

## Claims

1. A method for operating an electrochemical reactor,
the reactor comprising, as electrodes, an anode and a cathode, the reactor being configured to receive a feed of a starting material, to effect electrochemical reaction of the starting material into a product in the presence of a catalyst-coated electrode, and to output the product,
wherein the reactor is operated based on a set of operation parameters, the operation parameters at least comprising a voltage over the electrodes of the reactor and a dosage of catalyst solution and/or catalyst precursor solution into the feed of the starting material,
the method comprising:
receiving a reactor model, the reactor model describing a behavior of the reactor, including at least a relation between the voltage over the electrodes, and the dosage of catalyst solution and/or catalyst precursor solution into the starting material feed,
determining an optimized dosage by optimizing the dosage of catalyst solution and/or the catalyst precursor into the starting material feed in order to minimize the voltage using the reactor model, and
outputting the optimized dosage for being used at operating the reactor.

2. The method according to claim 1, wherein the reactor is one of a plurality of reactors, the plurality of reactors being electrically connected to each other and/or receiving their respective starting material feed in parallel, and wherein determining an optimized dosage comprises optimizing the dosage for each of the plurality of reactors and determining an optimized dosage by combining the optimized dosages for each of the plurality of reactors.

3. The method according to claim 1 or 2, wherein receiving a reactor model comprises:
receiving reactor metadata indicating at least one of the number, type and age of parts in the reactor, the geometric configuration of the reactor and an identifier of the reactor,
receiving sensor data representative for a current status of the reactor, and
generating the reactor model by training a machine learning model based on the reactor metadata and the sensor data, wherein the machine learning model at least models the voltage over the electrodes.

4. The method according to claim 3, wherein generating the reactor model comprises:
generating a combined dataset by combining the reactor metadata and the sensor data,
generating a subset of the combined dataset, the subset at least comprising the voltage over the electrodes, and
training the machine learning model with the subset.

5. The method according to claim 3 or 4, the sensor data indicating at least one of: an electrical current consumption of the reactor, the voltage over the electrodes of the reactor, an inflow of starting material into the reactor, an outflow of product out of the reactor, a concentration of starting material in a solvent introduced into the reactor, and a dosage of catalyst solution and/or catalyst precursor solution into the feed of the starting material.

6. The method according to any one of the preceding claims, wherein outputting the optimized dosage comprises at least one of: communicating the optimized dosage to an operator, and communicating the optimized dosage to a process control system for the reactor.

7. The method according to any one of the preceding claims, further comprising dosing the catalyst solution and/or the catalyst precursor solution into the feed of the starting material according to the optimized dosage.

8. The method according to any one of the preceding claims, wherein the reactor is one of a plurality of reactors, the plurality of reactors being electrically connected to each other, wherein the starting material feed is a common starting material feed for at least some of the reactors, and wherein these reactors receive the starting material feed in parallel.

9. The method according to any one of the preceding claims, wherein the electrochemical reaction comprises the reduction of hydrogen cations to hydrogen gas and/or the reduction of an alkaline metal cation to the corresponding alkaline metal.

10. The method according to any one of the preceding claims, wherein the starting material comprises an aqueous solution of hydrochloric acid and/or and aqueous solution of sodium chloride.

11. The method according to any one of the preceding claims, wherein the catalyst comprises nickel, palladium, platin, cobalt, rhodium, iridium, copper, antimony, silver, molybdenum, or a combination of at least two of the aforementioned metals.

12. The method according to any one of the preceding claims, determining an optimized dosage and/or receiving a reactor model is performed repeatedly, preferably periodically.

13. A system for operating an electrochemical reactor,
the reactor comprising, as electrodes, an anode and a cathode, the reactor being configured to receive a feed of a starting material, to effect electrochemical reaction of the starting material into a product in the presence of a catalyst-coated or catalyst-deposited electrode, and to output the product,
the system being configured to carry out the method according to any one of claims 1 to 12 and comprising:
a reactor model handling entity, configured to receive and/or update and/or generate a reactor model, the reactor model describing a behavior of the reactor, including at least a relation between the voltage over the electrodes and the dosage of catalyst solution into the starting material feed,
a dosage optimizer, configured to optimize the dosage of catalyst solution into the starting material feed in order to minimize the voltage using the reactor model, and
an output interface, configured to output the dosage for being used at operating the reactor.

14. A computer program product comprising instructions which, when the program is executed by a computer, cause the computer to carry out the method of one of claims 1 to 12.

15. A computer-readable storage medium comprising instructions which, when executed by a computer, cause the computer to carry out the method of one of claims 1 to 12.
